# EUROPEAN PATENT SPECIFICATION

(11) **EP 2 899 239 B1**
(45) Date of publication and mention of the grant of the patent: **07.12.2016**
(21) Application number: 14461592.9
(22) Date of filing: 27.11.2014
(51) Int. Cl.: C09C 1/36

(54) **THE METHOD OF PREPARATION OF TIO2 - ACTIVATED CARBON COMPOSITES**
VERFAHREN ZUR HERSTELLUNG VON TIO2 - AKTIVKOHLE-KOMPOSITEN
PROCÉDÉ DE PRÉPARATION DE COMPOSITES TIO2 - CHARBON ACTIF

(30) Priority: 27.01.2014 PL 40693614
(43) Date of publication of application: 29.07.2015
(73) Proprietor: Zachodniopomorski Uniwersytet Technologiczny w Szczecinie, 70-310 Szczecin (PL)
(72) Inventor: Michalkiewicz, Beata, 71-244 Szczecin (PL); Morawski, Antoni Waldemar, 70-775 Szczecin (PL); Glonek, Karolina, 73-120 Chociwel (PL); Mlodzik, Jacek, 78-540 Kalisz Pomorski (PL); Majewska, Justyna, 71-427 Szczecin (PL)
(74) Representative: Zawadzka, Renata

(56) References cited:
- LIU ET AL: "A TiO2/AC composite photocatalyst with high activity and easy separation prepared by a hydrothermal method", JOURNAL OF HAZARDOUS MATERIALS, vol. 143, no. 1-2, 13 April 2007 (2007-04-13), pages 257-263, XP022028027, ELSEVIER, AMSTERDAM, NL ISSN: 0304-3894, DOI: 10.1016/J.JHAZMAT.2006.09.026
- DATABASE WPI Week 201373 Thomson Scientific, London, GB; AN 2013-M70501 XP002740716, -& PL 397 285 A1 (UNIV ZACHODNIOPOMORSKI TECHNOLOGICZNY) 10 June 2013 (2013-06-10)

## Description

The present invention concerns a method of preparation of TiO₂ - activated carbon composite (AC- TiO₂).

AC- TiO₂ composites are thought to be a new generation of photocatalysts with great future potential. The combination of photocatalytic properties of TiO₂ with high porosity of activated carbon (AC) provides surprising satisfactory results, with the low cost of AC being an additional advantage. A synergistic effect of AC and TiO₂ in the degradation of several compounds has been observed, including: 4-chlorophenol, 4-dichlorophenoxyacetic acid (J. Matos, J. Laine, J.-M. Herrmann, Appl.Catal. B: Environ. 18 (1998) 281-291, J. Matos, J. Laine, J.-M. Herrmann, Carbon 37 (1999) 1870-1872, J. Matos, J. Laine, J.M. Hermann, J. Catal. 200 (2001) 10-20 J. Matos, J. Laine, J.-M. Herrmann, D. Uzcategui, J.L. Brito, Appl. Catal. B: Environ. 70 (2007) 461-469., J.-M. Herrmann, J. Matos, J. Disdier, C. Guillard, J. Laine, S. Malato, J. Blanco, Catal. Today 54 (1999) 255-265)

AC-TiO₂ composites are usually produced using activated carbon and titanium alkoxide (Y.J. Li, S.Y. Zhang, Q.M. Yu, W.B. Yin, Appl. Surf. Sci. 253 (2007) 9254-9258, W.D.Wang, C.G. Silva, J.L. Appl. Catal.B: Environ. 70 (2007) 470-478, Y.B. Ryu, S.S. Park, G.D. Lee, S.S. Hong, J. Ind. Eng. Chem. 12 (2006) 289) lub tetrachlorku tytanu (H.M. Cheng, J.M. Ma, Z.G. Zhao, L.M. Qi, Chem. Mater. 7 (1995) 663-671, S.X. Liu, X.Y. Chen, X. Chen, J. Hazard. Mater. 143 (2007) 257-263).

The most commonly used alkoxides include: titanium tetra-n-butylate (S.K. Tang, T.T. Teng, Abbas F.M. Alkarkhi, Z. Li (2012) 110-115, Y. Liu, S. Yang, J. Hong, C. Sun 142 (2007) 208-215, Z. He, S. Yang, Y. Ju, C. Sun 21(2009) 268-272, W. Zhang, L. Zou, L. Wang 168 (2011) 485-492, M. Zeng, Y. Li, M. Ma, W. Chen, L. Li 23(2013) 1019-1027, Y. Li, X. Zhou, W. Chen, L. Li, M. Zen, S. Qin, S. Sun 227-228 (2012) 25-33, S. Yao, J. Li, Z. Shi (2010) 272-278) and isopropyl titanium (M. Asiltürk, 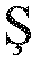 . 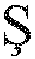 ener (2012) 354-363), B. Gao, P.S. Yap, T.M. Lim, T.T. Lim 171 (2011) 1098-1107), titanium ethylate (D. Huang, Y. Miyamoto, J. Ding, J. Gu, S. Zhu, Q. Liu, T. Fan, Q. Guo, D. Zhang 65 (2011) 326-328, D. Huang, Y. Miyamoto, T. Matsumoto, T. Tojo, T. Fan, J. Ding, Q. Guo, D. Zhang78 (2011) 9-15).

In the synthesis from alkoxides, alkoxides are dissolved in alcohol (ethanol for titanium tetra-n-butylate, n-propanol for titanium isopropoxide, methanol for titanium ethylate), acid aquatic solution (HNO₃, HCl etc.) to obtain a sol. Then, activated carbon is added and the solution is gelified. The gel is dried to obtain a powder. Amines are frequently added to the reaction mixture (W. Zhang, L. Zou, L. Wang 168 (2011) 485-492, Y. Liu, S. Yang, J. Hong, C. Sun 142 (2007) 208-215, M. Zeng, Y. Li, M. Ma, W. Chen, L. Li 23(2013) 1019-1027). Activated carbon sometimes undergoes pretreatment, with boiling water (B. Gao, P. S. Yap, T. M. Lim, T. T. Lim 171 (2011) 1098- 1107) and hydrochloric acid (Y. Liu, S. Yang, J. Hong, C. Sun 142 (2007) 208-215). The drawback of the method is high cost of alkoxides.

In the synthesis with TiCl₄ in its simplest form, activated carbon is added to an aquatic solution containing hydrochloric acid and titanium chloride. Hydrolysis occurs at an elevated temperature (of approximately 100°C). The product is filtered and dried (Z. Zhang, J. Hwang, M. Ning, X. Li 37 (2012) 16018-16024). Sulphates and mineral acids are frequently added to the reaction mixture (S.X. Liu, X.Y. Chen, X. Chen 143 (2007) 257-263, C. Lin, W. Tu, C. Kuo, S. Chien 196 (2011) 4865-4869). The drawback of the method is the introduction of chloride into the reaction mixture.

Some recently published papers have reported a method using inexpensive and chloride-free H₂TiO₃ which is mixed with H₂O₂ and NH₄OH at the temperature of 0°C. Once activated carbon has been added, the mixture is placed in an autoclave and exposed to temperature (of approximately 200°C). After drying, the product is calcined at 300-800 °C. The method requires activated carbon to be pre-treated with boiling water (X. Wang, Y. Liu, Z. Hu, Y. Chen, W. Liu, G. Zhao 169 (2009) 1061-1067, X. Wang, Z. Hu, Y. Chen, G. Zhao, Y. Liu, Z. Wen 255 (2009) 3953-3958). The last method is much more complicated than all the other methods.

All the above methods use activated carbon which is produced by carbonisation and activation of materials containing elemental carbon. During carbonisation stage, carbon is exposed to temperatures of 500-900°C, in the absence of oxygen, a solid organic source. The raw material is activated with physical or chemical agents. In chemical activation, the carbonised material is impregnated with solutions of liquid inorganic compounds. After drying, the mixture undergoes heat treatment at temperatures in the range of 400-900°C. The most commonly used activators include: KOH, NaOH, H₃PO₄, and ZnCl₂. Activated carbon is the end product, with a high degree of porosity and a well-developed surface area. Such materials can be applied as photocatalysts and good adsorbents e.g. for CO₂ adsorption.

A Polish patent application P. 397285 describes a method of deriving activated carbon from molasses. Beet and/or cane molasses is first dried in the temperature range from 70°C to 200°C, and then crushed and impregnated with an activator (weight ratio of 1:0.1-15). The mixture is dried at the temperature range of 80-150°C and the product is ground and carbonised in inert atmosphere at the temperature range of 400-1000°C. Then, the carbonaceous raw material is treated with a solution of HCl, washed with distilled water and dried at the temperature range of 50-250°C, with the end product being activated carbon. Advantageous effects are obtained using the following activators: KOH and/or NaOH and/or ZnCl₂ and/or Na₂CO₃ and/or K₂CO₃. An inert gas delivered at 100 - 700 ml/min has a positive influence. Nitrogen or argon are commonly used.

A Polish patent application P. 404248 describes a method of deriving activated carbon from molasses. An activator is added to molasses, the mixture is dried, crushed and carbonised in inert atmosphere at the temperature range of 400-1000°C. The carbonaceous raw material is treated with an HCl solution, washed with distilled water and dried at the temperature range of 50-250°C. Undried, liquid molasses is mixed with an activator at the weight ratio of 1:0.1-20. The commonly used activators include KOH and/or NaOH and/or ZnCl₂ and/or Na₂CO₃ and/or K₂CO₃. Then, the mixture is dried at the temperature range of 80-200°C. Advantageous effects are obtained using beet and/or cane molasses. An inert gas delivered at 5 - 50 1/h has a positive influence.

The subject of the present invention is a method of preparation of TiO₂ - activated carbon composites (AC-TiO₂), characterized by fact that undried, liquid molasses is mixed with TiO₂, dried, crushed and carbonised in inert atmosphere at the temperature range of 400-1000°C. Then, the carbonaceous raw material is treated with an HCl solution, washed with distilled water and dried at the temperature range of 50-250°C. Advantageous effects are obtained with an activator where molasses and TiO₂ are at the weight ratio of 1:0.01-10. The commonly used activators include KOH and/or NaOH and/or ZnCl₂ and/or Na₂CO₃ and/or K₂CO₃. TiO₂ and the activator have been added to molasses, the mixture is dried at the temperature range of 80-200°C. Both beet and cane molasses can be used. Any form of TiO₂ can be used, e.g. anatase, rutile, a mixture of anatase and rutile at any ratio, and titanium dioxide nanoparticles. An inert gas delivered at 100 - 700 ml/min has a positive effect. Advantageous effects are obtained using nitrogen or any noble gas as the inert gas.

The invention enables production of TiI₂/activated carbon composites with a high surface area of 200-2800 m²/g from molasses, a by-product used for sugar production, and TiO₂ obtained from any source. Compared to currently used methods, the present invention is simpler and cheaper. TiO₂ is introduced at the stage of activated carbon production from molasses. The present method can be used in installations used for activated carbon production from molasses. The only additional expense is the cost of TiO₂. The advantage of the present method is that it applies the commonly accepted methods of activated carbon fabrication to produce a new product: a TiO₂/activated carbon composite with enhanced adsorption properties. Consequently, a readjustment of existing activated carbon installations that use traditional raw materials to the new method would be simple and cheap.

The essential feature of the invention is presented more in-depth in the below examples. The surface area of fabricated activated carbons was determined by the liquid nitrogen adsorption, with the BET method.

### Example 1

6 g of liquid beet molasses was mixed with TiO₂ at the weight ratio of 1:0.08 and was left for 3 h. Then, the mixture was dried at the temperature of 200°C. The powdered material was carbonised in inert atmosphere - nitrogen (15 1/h) at 750°C. Next, the composite was treated with 5 N HCl, washed with distilled water and dried at the temperature of 150°C.

The surface area of the composite produced in this way was 393 m²/g.

### Example 2

6 g of liquid beet molasses was mixed with TiO₂ at the weight ratio of 1:0.01 and with K₂CO₃ at the weight ratio of 1:0.01 and was left for 0.5 h. Then, the mixture was dried at the temperature of 150°C. The powdered material was carbonised in inert atmosphere - nitrogen (6 1/h) at 400°C. Next, the composite was treated with 5 N HCl, washed with distilled water and dried at the temperature of 250°C.

The surface area of the composite produced in this way was 215 m²/g.

### Example 3

6 g of liquid beet molasses was mixed with TiO₂ at the weight ratio of 1:10 and was left for 3 h. Then, the mixture was dried at the temperature of 50°C. The powdered material was carbonised in inert atmosphere - nitrogen (42 1/h) at 1000°C. Next, the composite was treated with 5 N HCl, washed with distilled water and dried at the temperature of 150°C.

The surface area of the composite produced in this way was 411 m²/g.

### Example 4

6 g of liquid beet molasses was mixed with TiO₂ at the weight ratio of 1:1 and was left for 2 h. Then, the mixture was dried at the temperature of 150°C. The powdered material was carbonised in inert atmosphere - nitrogen (10 1/h) at 600°C. Next, the composite was treated with 5 N HCl, washed with distilled water and dried at the temperature of 150°C.

The surface area of the composite produced in this way was 302 m²/g.

### Example 5

6 g of liquid beet molasses was mixed with TiO₂ at the weight ratio of 1:5 and with NaOH at the weight ratio of 1:25 and was left for 0.5 h. Then, the mixture was dried at the temperature of 200°C. The powdered material was carbonised in inert atmosphere - nitrogen (10 1/h) at 800°C. Next, the composite was treated with 5 N HCl, washed with distilled water and dried at the temperature of 200°C.

The surface area of the composite produced in this way was 590 m²/g.

### Example 6

6 g of liquid beet molasses was mixed with TiO₂ at the weight ratio of 1:8 and with Na₂CO₃ at the weight ratio of 1:5 and was left for 4 h. Then, the mixture was dried at the temperature of 200°C. The powdered material was carbonised in inert atmosphere - nitrogen (8 1/h) at 650°C. Next, the composite was treated with 5 N HCl, washed with distilled water and dried at the temperature of 200°C.

The surface area of the composite produced in this way was 750 m²/g.

### Example 7

6 g of liquid beet molasses was mixed with TiO₂ at the weight ratio of 1:0.1 and with NaOH at the weight ratio of 1:1 and was left for 3 h. Then, the mixture was dried at the temperature of 200°C. The powdered material was carbonised in inert atmosphere - nitrogen (15 1/h) at 750°C. Next, the composite was treated with 5 N HCl, washed with distilled water and dried at the temperature of 200°C.

The surface area of the composite produced in this way was 1390 m²/g.

### Example 8

6 g of liquid beet molasses was mixed with TiO₂ at the weight ratio of 1:3 and with NaOH+KOH (1:1) at the weight ratio of 1:3 and was left for 3 h. Then, the mixture was dried at the temperature of 200°C. The powdered material was carbonised in inert atmosphere - nitrogen (15 1/h) at 550°C. Next, the composite was treated with 5 N HCl, washed with distilled water and dried at the temperature of 200°C.

The surface area of the composite produced in this way was 875 m²/g.

## Claims

1. The method of preparation of an activated carbon-TiO₂ composite, **characterised in that** an undried, liquid molasses is mixed with TiO₂, dried, crushed, carbonised in inert atmosphere at the temperature range of 400-1000°C, and then the carbonaceous raw material and TiO₂ are treated with a solution of HCl, washed with distilled water and dried at the temperature range of 50-250°C.

2. The method according to claim 1, **characterised in that** molasses and TiO₂ are mixed with the addition of an activator at the weight ratio between molasses and TiO₂ of 1:0.01-10.

3. The method according to claim 2, **characterised in that** KOH and/or NaOH and/or ZnCl₂ and/or Na₂CO₃ and/or K₂CO₃. are used as activators.

4. The method according to claim 2, **characterised in that** the mixture is dried at the temperature range of 80-200°C.

5. The method according to claim 1, **characterised in that** cane molasses and/or beet molasses are used.

6. The method according to claim 1, **characterised in that** it uses TiO₂ in any form: anatase, rutile, a mixture of anatase and rutile at any ratio, TiO₂ nanoparticles.

7. The method according to claim 1, **characterised in that** an inert gas is delivered at the rate of 100 - 700 ml/min.

8. The method according to claim 1, **characterised in that** either nitrogen or any noble gas is used as the inert gas.

## Patentansprüche

1. Verfahren zur Herstellung von aktiven Kompositstoff Kohlenstoff-TiO₂, **dadurch gekennzeichnet, dass** die nicht getrocknete, flüssige Melasse mit TiO₂ gemischt wird, die resultierende Mischung getrocknet, gemahlen und unter einer-Atmosphäre von Inertgas bei einer Temperatur von 400°C bis 1000°C karbonisiert wird, dann wird das Material, dass den Kohlenstoff und TiO₂ enthält, mit einer Lösung von HCl behandelt, mit destilliertem Wasser gewaschen und bei einer Temperatur von 50°C bis 250°C getrocknet.

2. Verfahren nach Anspruch 1, **dadurch gekennzeichnet, dass** die Melasse und TiO₂ mit der Zugabe des Aktivators in einem Gewichtsverhältnis von 1: 0,01-10. gemischt wird.

3. Verfahren nach Anspruch. 2, **dadurch gekennzeichnet, dass** als Aktivator KOH und / oder NaOH und / oder ZnCl₂ und / oder Na₂CO₃ und / oder K₂CO₃ verwendet wird.

4. Verfahren nach Anspruch 2, **dadurch gekennzeichnet, dass** die Mischung bei einer Temperatur von 80°C bis 200°C getrocknet wird.

5. Verfahren nach Anspruch 1, **dadurch gekennzeichnet, dass** Zuckerrohrmelasse und / oder Zuckerrübenmelasse verwendet wird.

6. Verfahren nach Anspruch. 1, **dadurch gekennzeichnet, dass** TiO₂ in einer beliebigen Form verwendet wird Anatas, Rutil, Anatas und Rutil-Gemisch in beliebigem Verhältnis, Nanopartikeln TiO₂.

7. Verfahren nach Anspruch 1, **dadurch gekennzeichnet, dass** das chemisch inerte Gas mit einer Rate von 100, - 700 ml / min. verabreicht wird

8. Verfahren nach Anspruch 1, **dadurch gekennzeichnet, dass** als das chemisch inerte Gas, Stickstoff oder ein beliebiges Edelgas verwendet wird.

## Revendications

1. Méthode de production des composites charbon actif TiO₂, **caractérisé en ce qu'**on mélange une mélasse liquide, non séchée avec TiO₂, on sèche un mélange obtenu, on le broye et soumet a une carbonisation dans l'atmosphère d'un gaz inerte dans une temperature de 400°C à 1000°C, ensuite on traite le matériel contenant carbon et TiO₂ avec une solution de HCl, on le lave avec de l'eau distillée et on le sèche dans une temperature de 50°C à 250°C.

2. Méthode selon la revendication 1, **caractérisé en ce qu'**on mélange la mélasse et TiO₂ avec un activateur en appliquant un rapport pondéral mélasse : TiO₂ de 1:0,01-10.

3. Méthode selon la revendication 2 **caractérisé en ce qu'**on utilise comme activateur KOH et/ou NaOH et/ou ZnCl₂ et/ou Na₂CO₃ et/ou K₂CO₃.

4. Méthode selon la revendication 2 **caractérisé en ce qu'**on séche le mélange dans une temperature de 80°C à 200°C.

5. Méthode selon la revendication 1 **caractérisé en ce qu'**on utilise la mélasse de canne à sucre ou la melasse des betteraves.

6. Méthode selon la revendication 1 **caractérisé en ce qu'**on utilise TiO₂ w dans une forme quelconque anatase, rutile, mélange anatase: rutile à tout rapport, nanoparticles de TiO₂.

7. Méthode selon la revendication 1 **caractérisé en ce qu'**on fourni le gaz inerte avec une vitesse de 100 - 700 ml/min.

8. Méthode selon la revendication 1 **caractérisé en ce qu'**en tant qu'un gaz inerte on utilise azote ou tout gaz noble.
